(19) Europäisches Patentamt European Patent Office Office européen des brevets

(11) **EP 4 014 377 B1**

(12) **EUROPEAN PATENT SPECIFICATION**

(45) Date of publication and mention of the grant of the patent:
**21.02.2024 Bulletin 2024/08**

(21) Application number: **19839653.3**

(22) Date of filing: **05.10.2019**

(51) International Patent Classification (IPC):
*H04L 27/26* ^(2006.01)   *H04L 5/00* ^(2006.01)
*H04L 1/1829* ^(2023.01)   *H04L 27/00* ^(2006.01)

(52) Cooperative Patent Classification (CPC):
**H04L 27/2626; H04L 1/1861; H04L 5/0053;**
**H04L 5/0055; H04L 27/0006; H04L 27/2614**

(86) International application number:
**PCT/IB2019/001269**

(87) International publication number:
**WO 2021/260402 (30.12.2021 Gazette 2021/52)**

(54) **A METHOD OF INTERLACED PUCCH DESIGN - FORMAT 1**

VERFAHREN EINES VERSCHACHTELTEN PUCCH-DESIGNS - FORMAT 1

PROCÉDÉ DE CONCEPTION DE PUCCH ENTRELACÉ-FORMAT 1

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**22.06.2022 Bulletin 2022/25**

(73) Proprietor: **Orope France Sarl**
**92200 Neuilly sur Seine (FR)**

(72) Inventor: **LIN, Hao**
**92200 Neuilly sur Seine (FR)**

(74) Representative: **Manitz Finsterwald**
**Patent- und Rechtsanwaltspartnerschaft mbB**
**Martin-Greif-Strasse 1**
**80336 München (DE)**

(56) References cited:
EP-A1- 3 410 808      EP-A1- 3 512 277
WO-A1-2017/167003   US-A1- 2012 039 278
US-A1- 2019 159 193

• QUALCOMM INCORPORATED: "UL signals and channels for NR-U", 3GPP DRAFT; R1-1909244 7.2.2.1.3 UL SIGNALS AND CHANNELS FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. Prague, CZ; 20190826 - 20190830 17 August 2019 (2019-08-17), XP051765849, Retrieved from the Internet: URL:http://www.3gpp.org/ftp/tsg_ran/WG1_RL 1/TSGR1_98/Docs/R1-1909244.zip [retrieved on 2019-08-17]
• ZTE ET AL: "Considerations on UL reference signals and channels design for NR-U", 3GPP DRAFT; R1-1903872 CONSIDERATIONS ON UL REFERENCE SIGNALS AND CHANNELS DESIGN FOR NR-U_FINAL, 3RD GENERATION PARTNERSHIP PROJECT (3GPP), MOBILE COMPETENCE CENTRE ; 650, ROUTE DES LUCIOLES ; F-0692 , vol. RAN WG1, no. Xi'an, China; 20190408 - 20190412 7 April 2019 (2019-04-07), XP051699308, Retrieved from the Internet: URL:http://www.3gpp.org/ftp/Meetings%5F3GP P%5FSYNC/RAN1/Docs/R1%2D1903872%2Ezip [retrieved on 2019-04-07]

EP 4 014 377 B1

- **PANASONIC: "UL signals and channels for NR-U", 3GPP DRAFT; R1-1908424 NR-U_UL_PANASONIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20190826 - 20190830 16 August 2019 (2019-08-16), XP051765033, Retrieved from the Internet: URL:http://www.3gpp.org/ftp/tsg_ran/WG1_RL 1/TSGR1_98/Docs/R1-1908424.zip [retrieved on 2019-08-16]**

## Description

### TECHNICAL FIELD

The present disclosure relates to the field of communication technologies in unlicensed spectrum, and in particular, to a method for a user equipment to transmit a physical uplink control channel in a wireless communication system supporting an unlicensed band and apparatuses supporting the same.

The communication technology is for example a 5G (fifth generation) network using the 5G NR (New Radio) as radio access technology (RAT) defined by 3GPP. The present disclosure is applicable to 5G NR-U (NR in unlicensed spectrum).

### BACKGROUND

According to the NR specification Release 15 (NR R15, 3GPP TS 38.213), the user equipment (UE) reports uplink control information (UCI) in a physical uplink control channel (PUCCH).

PUCCH format 0

In NR Rel. 15, the PUCCH format 0 is generated from a specified computer generated sequence (CGS) of length 12, i.e., S(n),n=0,...,11, which possesses very low Peak-to-Average Power Ratio (PAPR) property. This channel can carry 1 or 2-bits ACK/NACK (A/N) information together with Scheduling Request (SR) indication. The A/N information is presented by the cyclic shift (CS), additionally introduced on top of the CGS. There are 12 possible CS, i.e. $m_{cs}$ = 0, ...,11. The cyclic shifted sequence is given by

$$S_{cs}(n) = e^{\frac{j\pi}{6}\alpha n} \cdot S(n), n = 0, ..., 11,$$

where $\alpha$ is a phase rotation depending on the selected CS $m_{cs}$. The A/N information is tightly bounded with the $m_{cs}$ value, which is specified in NR Rel. 15, TS 38.213 section 9.2.3 and section 9.2.5.1. The PUCCH format 0 occupies 1 Physical Resource Block (PRB) in frequency (12 subcarriers) and 1 or 2 orthogonal frequency-division multiplexing (OFDM) symbols in time domain.

PUCCH format 1

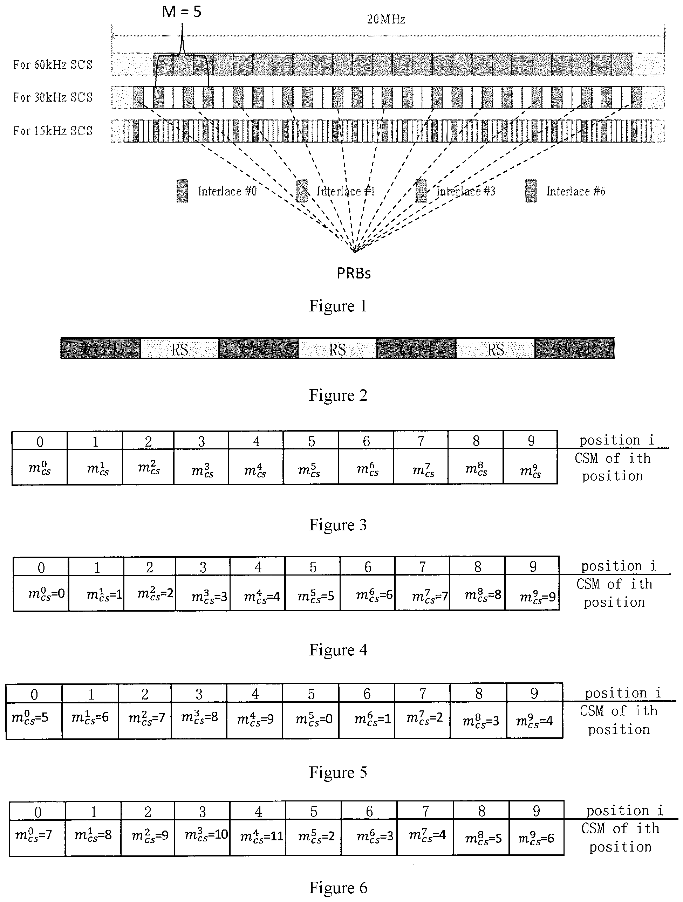

The PUCCH format 1 is an extension of format 0 in a way that the format 1 spreads the format 0 over multiple OFDM symbols (4 or more) as presented in NR Rel. 15, TS 38.213 section 9.2.2 and section 9.2.5.2. Moreover the DeModulation Reference Signals (DMRS) are alternated with the control sequence such as shown in Figure 2, where one slot is used for a control signal and the next slot is used for a reference signal, etc.

NR-U PUCCH interlace

In the unlicensed band in 5G Hz, the regulation imposes that if a transmitter wants to operate transmission in the channel, the transmission has to occupy at least 80% of the channel bandwidth. With this restriction in mind, NR-U decided to adopt an interlaced structure for two uplink channel transmissions, they are PUCCH and PUSCH. Each interlace structure will have specific number of PRB. Between each consecutive PRB pairs, there is M PRB further apart. For example, in a 20 Mhz bandwidth and for 30 Khz subcarrier spacing case, 1 interlace has 10 or 11 PRBs and $M$ = 5 as shown in Figure 1.

The NR Rel.15 PUCCH format 1 occupies only 1 PRB in frequency domain, while in NR-U the interlaced structure has to be implemented. A simple repetition of NR Rel. 15 PUCCH format 1 in each of the PRBs of an interlace will cause very high PAPR issue. Thus, an enhancement should be done for this new design of PUCCH format 1 in NR-U systems.

R1-1909244 (QUALCOMM INCORPORATED: "UL signals and channels for NRU", 3GPP DRAFT) proposes UL waveform design options for NR-U in sub-7Ghz band along with the performance evaluation.

R1-1903872 (ZTE ET AL: "Considerations on UL reference signals and channels design for NR-U", 3GPP DRAFT) discusses some potential solutions and techniques for NR-U UL reference signal design and physical channel design.

R1-1908424 (PANASONIC: "UL signals and channels for NR-U", 3GPP DRAFT) discusses the following NR-U UL aspects: Block interlaced PUCCH, Block interlaced PUSCH and SRS enhancement.

**SUMMARY**

The present invention is defined in the independent claims. A first object of the present disclosure is a method of generating a physical uplink control channel (PUCCH) in unlicensed spectrum, as defined in independent claim 1. as defined in independent claim 1.

Such method allows to generate a PUCCH format 1 in the interlaced structure that is able to carrier 1-bit, 2-bit A/N. Moreover this method allows to maintain a low PAPR property. The first and second indications may be assigned to different user equipments (UE) in order to enable UE multiplexing in the same resource, i.e. different UEs will be assigned to different first cyclic shift member, and/or different first cyclic shift member position.

Further embodiments of the method are defined in claims 2-12. Further embodiments of the method are defined in dependent claims 2-12.

A second object of the present disclosure is a user equipment transmitting a physical uplink control channel to a base station in a wireless communication system in unlicensed spectrum, as defined in independent claim 13. as defined in independent claim 13.

A third object of the present disclosure is a computer readable medium comprising program instructions for causing a user equipment to perform the steps of the transmitting method according to the first object, as defined in independent claim 14. object, as defined in independent claim 14.

**BRIEF DESCRIPTION OF DRAWINGS**

The appended drawings required in description of embodiments or the prior art will be briefly described below.

- Figure 1 shows an example of an interlaced structure for PUCCH;
- Figure 2 shows an example of reference signal alternated with a control signal;
- Figure 3 shows an example of a cyclic shift group (CSG) within 1 interlace;
- Figure 4 shows another example of a cyclic shift group (CSG) within 1 interlace;
- Figure 5 shows another example of a cyclic shift group (CSG) within 1 interlace;
- Figure 6 shows another example of a cyclic shift group (CSG) within 1 interlace;
- Figure 7 shows another example of a cyclic shift group (CSG) within 1 interlace.

**DESCRIPTION OF EMBODIMENTS**

In the following disclosure, we will first present a cycle shift group and cycle shift member, followed by examples for implementing a method of generating a PUCCH format 1.

Cycle shift group and cycle shift members

The cyclic shift group (CSG) can be expressed as $m_{cs}^i$ with $i = 0, ..., N_{RB}^{interlace} - 1$, where $N_{RB}^{interlace}$ stands for the total number of PRB within 1 interlace; $m_{cs}^i$ is a cyclic shift member and its corresponding position is $i$-th position within the cyclic shift group. Thus a cyclic shift group contains $N_{RB}^{interlace}$ cyclic shift members and accordingly it contains $N_{RB}^{interlace}$ positions. In the example of figure 3, we assume $N_{RB}^{interlace} = 10$. Therefore, the position i goes from 0 up to 9.

If one cyclic shift member as well as its position are determined (i.e. $m_{cs}^i$), the cyclic shift member on the rest of the positions (i.e. $m_{cs}^j$) are derived from some pre-defined relationship, which is:

$$m_{cs}^j = (m_{cs}^i + ((j - i) \bmod N_{RB}^{interlace})T) \bmod 12.$$

In this example, all cyclic shift members on $j$-th position, $m_{cs}^j$, can be derived from $m_{cs}^i$ and the relative position between $j$ and $i$, and with a parameter $T$. Here $m_{cs}^i$ is the value of the so-called first cycle shift member (CSMf), to be indicated by a first indication, $i$ is the position of CSMf, to be indicated by a second indication, and $T$ is an optional first parameter to be indicated by a third indication.

Cycle shift member candidates and generation of PUCCH format 1

In the present disclosure, we assume that the cyclic shift member (CSM) takes the value from a set of candidate values, called cyclic shift member candidates. The candidate values are integer values from 0 up to 11, i.e. {0,1,2,3,4,5,6,7,8,9,10,11}. The reason of this choice is that after the cyclic shift group is decided, the PUCCH format 1 is generated as follows.

In this example, the reference parameters $m_{cs}^{\text{ref}}$, $p^{\text{ref}}$, $t^{\text{ref}}$, have a fixed or configured initial values. Thus, when the UE receives the offset$_1$, offset$_2$, offsets, the UE can obtain the first control sequence such as:

$$S_{cs}^i(n) = e^{\frac{j\pi}{6}m_{cs}^i n} \cdot b \cdot S(n), n = 0, \dots, 11; i = 0, \dots, N_{RB}^{interlace} - 1,$$

where S(n) is a base sequence and b is a complex-valued symbol, BPSK for 1-bit A/N or QPSK for 2-bit A/N.

Then, the first control sequence spreading is given by:

$$S_{cs}^{i,j}(n) = S_{cs}^i(n) \cdot w(j), n = 0, \dots, 11; i = 0, \dots, N_{RB}^{interlace} - 1, j = 0, \dots m - 1,$$

where, $w(j)$ is the first orthogonal sequence and we assume that have a PUCCH format 1 which contains m OFDM symbols for first control sequence spreading.

The first reference sequence is obtained by:

$$R_{cs}^i(n) = e^{\frac{j\pi}{6}m_{cs}^i n} \cdot S(n), n = 0, \dots, 11; i = 0, \dots, N_{RB}^{interlace} - 1.$$

Then the first reference sequence spreading is:

$$R_{cs}^{i,j}(n) = R_{cs}^i(n) \cdot w'(j), n = 0, \dots, 11; i = 0, \dots, N_{RB}^{interlace} - 1, j = 0, \dots l - 1$$

where, $w'(j)$ is the second orthogonal sequence and we assume that have a PUCCH format 1 which contains l OFDM symbols for first reference sequence spreading.

Examples of determination of the cycle shift group

For example, if we assume that $N_{RB}^{interlace} = 10$, and $T=1$, when one cyclic shift member (CSM) value and its corresponding position is given, for example $m_{cs}^0 = 0$, then we can derive $m_{cs}^j = (0 + j \bmod 10) \bmod 12 = \{1,2,3,4,5,6,7,8,9\}$ for j={1,2,3,4,5,6,7,8,9}, respectively. Thus, the cyclic shift group CSG is $m_{cs}^i = i$, for i={0,1,2,3,4,5,6,7,8,9} as shown in Figure 4.

In this example, the first cyclic shift member CSMf (a.k.a. $m_{cs}$), for which the cyclic shift member value is indicated by the first indication and its position is indicated by the second indication, i.e. $m_{cs}^0 = 0$. The rest of the cyclic shift members (CSMn) in the group can be derived from a pre-defined relationship, which is $m_{cs}^j = (m_{cs}^0 + ((j - 0) \bmod 10)T) \bmod 12$. Then the third indication will give the value of the parameter T, i.e. $T=1$ in our example.

Another example, if we set one cyclic shift member and its corresponding position to $m_{cs}^5 =$ 0, then we can derive $m_{cs}^j = (0 + (j-5)\bmod 10)\bmod 12 \; = \; \{5,6,7,8,9,1,2,3,4\}$ for j={0,1,2,3,4,6,7,8,9}, respectively. Thus, the cyclic shift group is {5,6,7,8,9,0,1,2,3,4} as shown in Figure 5.

In this example, the first cyclic shift member CSMf (a.k.a. $m_{cs}$), for which the cyclic shift member value is indicated by the first indication and its position is indicated by the second indication, i.e. $m_{cs}^5 = 0$. The rest of the cyclic shift members in the group can be derived from a pre-defined relationship, which is

$$m_{cs}^j = (m_{cs}^5 + ((j-5)\bmod 10)T)\bmod 12$$ . Then the third indication will give the value of the parameter $T$, i.e. $T$=1 in our example.

CSG determination with offset indications

Coming back to the CSG determination, the network, e.g. a base station, can send the first and second indications to inform the UE about the first cyclic shift member and its corresponding position. For example, the first indication can be an offset w.r.t. $m_{cs}^{\mathrm{ref}}$, e.g. offset$_1$ = 2; and the second indication can point directly to the position index, such as 5. In this manner, the UE knows that the first cyclic shift member is $m_{cs}^5 = m_{cs}^{\mathrm{ref}} + \mathrm{offset}_1 = 2$.

As long as the first cyclic shift member is determined, all the subsequent members are derived from it when the derivation relationship is determined, which can be depending on a the third indication. Assume that the third indication points the parameter $T$=1, then we have the following derivation relatinship:

$$m_{cs}^j = (m_{cs}^5 + ((j-5)\bmod 10))\bmod 12.$$

As a result the cycle shift group determined is given in Figure 6.

It is worth noting that the second and the third indications can also indicate an offset w.r.t. a pre-defined reference. For instance, for the second indication, the network can define a reference position, e.g., $p^{\mathrm{ref}}$=0, then the indication gives an offset$_2$. Thus, the UE will understand that the indicated position is $p=p^{\mathrm{ref}}$ + offset$_2$, where offset$_2$={0,1,2,3,4,5,6,7,8,9}.

Similarly, the third indication can also give an offsets within a set of candidate values w.r.t. a pre-defined value, e.g. T = A ($t^{\mathrm{ref}}$+offset$_3$). Assuming the candidate values are {1,3,5,7,11} and $t^{\mathrm{ref}}$=0. Then the third indication can indicate: offsets = {0,1,2,3,4}. Either ways, i.e. direct indication or indirect indication via reference and offsets, will lead to the same cyclic shift group.

Examples of CSG with scheduling request (SR)

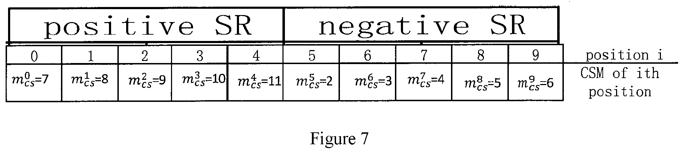

In a more complex example, the UE has to report positive SR or negative SR. The reference cyclic shift member value can be used to reflect positive and negative SR. An example is shown in Figure 7 where reference values are pre-defined :

positive SR: $m_{cs}^i = k$ , where i = {0,1,2,3,4} and k 7,8,9, 10,111;

negative SR: $m_{cs}^i = k$ , where i = {5,6,7,8,9} and k = {2,3,4,5,6}.

Alternatively, to include SR, we can also set the reference cyclic shift member value $m_{cs}^{\mathrm{ref}}$ and/or the reference position $p^{\mathrm{ref}}$ and/or the reference parameter $t^{\mathrm{ref}}$ to represent SR. For example, $p^{\mathrm{ref}}$=0 is used for a positive SR and $p^{\mathrm{ref}}$=5 is used for a negative SR. Another example, $t^{\mathrm{ref}}$=1 is used for a positive SR and $t^{\mathrm{ref}}$=7 is used for a negative SR. Another example, $m_{cs}^{\mathrm{ref}} = 0$ is used for a positive SR and $m_{cs}^{\mathrm{ref}} = 6$ is used for a negative SR. Any combination is also possible.

Example of UE multiplexing

In the above examples, the reference cyclic shift member, $m_{cs}^{\mathrm{ref}}$, may represent SR results, while the first, second and third indications are assigned to different UEs in order to enable UE multiplexing in the same resource, i.e. different UEs will be assigned to different first cyclic shift member, and/or different first cyclic shift member position, and/or different T.

List of abbreviations in the description and drawings:

| Acronyms | Full name |
|---|---|
| LTE | Long Term Evolution |
| LTE-A | Advanced long term evolution |
| NR | New Radio |
| NR-U | New Radio-unlicensed |
| BS | Base-station |
| UE | User Equipment |
| PUCCH | Physical Uplink Control CHannel |
| PUSCH | Physical Uplink Shared CHannel |
| UCI | UPlink control information |
| LBT | Listen Before Talk |
| SR | Scheduling Request |
| CSM | Cyclic Shift Member |
| CSMf | first Cyclic Shift Member |
| CSMn | subsequent Cyclic Shift Member |
| CSG | Cyclic Shift Group |
| A/N | ACK/NACK (Acknowledgment/Non-Acknowledgment) |
| OFDM | Orthogonal frequency-division multiplexing |

In the above description, the mobile telecommunication system is a 5G mobile network comprising a 5G NR access network. The present example embodiment is applicable to NR in unlicensed spectrum (NR-U). The present disclosure can be applied to other mobile networks, in particular to mobile network of any further generation cellular network technology (6G, etc.).

The above is only a specific implementation manner of the present disclosure, the protection scope of the present disclosure should be subject to the protection scope of the claims.

The various embodiments / examples, aspects and features, if any, described in this specification that do not fall under the scope of the independent claims are to be interpreted as examples useful for understanding various embodiments of the disclosure.

**Claims**

1. A method of generating a physical uplink control channel, PUCCH, in unlicensed spectrum, which is transmitted by a user equipment, wherein the method comprises:

   - generating a PUCCH format 1 in an interlaced structure by:

      o determining a cyclic shift group, CSG, containing a first cyclic shift member, CSMf, and a plurality of subsequent cyclic shift members, CSMn, each cyclic shift member, CSM, being defined at least by a value and a position, by:

- configuring the CSMf with a first indication related to a CSMf value and a second indication related to a CSMf position, wherein the first indication is either a direct indication of the CSMf value from a set of CSM candidates or an indirect indication by a first offset with respect to a reference value of the CSMf in a set of ordered CSM candidates;
  - deriving the plurality of CSMn based on the CSMf value and on a relative position between the CSMf and each CSMn so as to define all CSM which are mutually different, wherein values of the plurality of subsequent CSMn are derived using a third function including at least one parameter T determined by a third indication;

wherein the position is a position of the CSMf in the CSG;

o determining a first control sequence $S_{cs}^{i}(n)$ , in one orthogonal frequency-division multiplexing, OFDM, symbol within OFDM symbols allocated for control sequence, by a first base sequence $S(n)$ , an acknowledgment information, A/N, symbol b and the CSG;

o determining a first reference sequence $R_{cs}^{i}(n)$ , in one OFDM symbol within all OFDM symbols allocated for reference sequence, by the first base sequence S(n) and the CSG;

**characterized in that** the third function is defined by:

$$m_{cs}^{j} = (m_{cs}^{i} + ((j - i) \bmod N_{RB}^{interlace})T) \bmod 12$$

wherein $m_{cs}^{i}$ corresponds to a cyclic shift member of the CSMn on position j in the CSG, $m_{cs}^{i}$ corresponds to the first cyclic shift member CSMf and i is the position indicated by the second indication, and $N_{RB}^{interlace}$ is a total number of PRB within 1 interlace.

2. The method of generating a PUCCH according to claim 1, wherein the A/N symbol is a complex-valued symbol b, BPSK for 1-bit A/N or QPSK for 2-bit A/N.

3. The method of generating a PUCCH according to claim 2, wherein the first control sequence is obtained by:

$$S_{cs}^{i}(n) = e^{\frac{j\pi}{6}m_{cs}^{i}n} \cdot b \cdot S(n)$$

wherein S(n) is the first base sequence, $m_{cs}^{i}$ is a cyclic shift member of the CSG, and a position corresponding to $m_{cs}^{i}$ is an i-th position within the CSG, and b is the A/N symbol.

4. The method of generating a PUCCH according to claim 3, wherein the first reference sequence is obtained by:

$$R_{cs}^{i}(n) = e^{\frac{j\pi}{6}m_{cs}^{i}n} \cdot S(n).$$

5. The method of generating a PUCCH according to any of claims 1 to 4, wherein the CSG includes scheduling request, SR, information.

6. The method of generating a PUCCH according to any of claims 1 to 5, the method comprising:

spreading the first control sequence $S_{cs}^{i,j}(n)$ over the OFDM symbols allocated for the control sequence; and

spreading the first reference sequence $R_{cs}^{i,j}(n)$ over the OFDM symbols allocated for reference sequence.

7. The method of generating a PUCCH according to claim 6, wherein the control sequence spreading is given by:

$$S_{cs}^{i,j}(n) = S_{cs}^{i}(n) \cdot w(j),$$

wherein w(j) is a first orthogonal sequence and for which the generated PUCCH format 1 contains m OFDM symbols for the first control sequence spreading;
and wherein the first reference sequence spreading is given by:

$$R_{cs}^{i,j}(n) = R_{cs}^{i}(n) \cdot w'(j),$$

wherein w'(j) is the second orthogonal sequence and for which the generated PUCCH format 1 contains l OFDM symbols for the first reference sequence spreading.

8. The method of generating a PUCCH according to claim 7, wherein, in case of an indirect indication, the reference value of the CSMf is either pre-defined or configured via a radio resource control, RRC, or derived by a first function.

9. The method of generating a PUCCH according to any of claims 1 to 8, wherein a default CSMf value is set in the absence of a first indication.

10. The method of generating a PUCCH according to any of claims 1 to 9, wherein the second indication is either a direct indication of the CSMf position in the CSG from a set of position candidates or an indirect indication by a second offset with respect to a reference position of the CSMf in a set of ordered position candidates.

11. The method of generating a PUCCH according to claim 10, wherein, in case of an indirect indication, the reference position of the CSMf is either pre-defined or configured via a radio resource control, RRC, or derived by a second function.

12. The method of generating a PUCCH according to any of claims 1 to 11, wherein a default CSMf position is set in the absence of a second indication.

13. A user equipment transmitting a physical uplink control channel, PUCCH, to a base station in a wireless communication system in unlicensed spectrum, wherein the user equipment comprises:

- a processor configured to generate a PUCCH format 1 in an interlaced structure by:

o determining a cyclic shift group, CSG, containing a first cyclic shift member, CSMf, and a plurality of subsequent cyclic shift members, CSMn, each cyclic shift member, CSM, being defined at least by a value and a position, by:

■ configuring the CSMf with a first indication related to a CSMf value and a second indication related to a CSMf position, wherein the first indication is either a direct indication of the CSMf value from a set of CSM candidates or an indirect indication by a first offset with respect to a reference value of the CSMf in a set of ordered CSM candidates;
■ deriving the plurality of CSMn based on the CSMf value and on a relative position between the CSMf and each CSMn so as to define all CSM which are mutually different, wherein values of the plurality of subsequent CSMn are derived using a third function including at least one parameter T determined by a third indication;

wherein the position is a position of the CSMf in the CSG;

o determining a first control sequence $S_{cs}^{i}(n)$, in one orthogonal frequency-division multiplexing, OFDM, symbol within OFDM symbols allocated for control sequence, by a first base sequence S(n), an acknowledgment information, A/N, symbol b and the CSG;

o determining a first reference sequence $R_{cs}^{i}(n)$, in one OFDM symbol within all OFDM symbols allocated for reference sequence, by the first base sequence S(n) and the CSG;
**characterized in that** the third function is defined by:

$$m_{cs}^j = (m_{cs}^i + ((j - i) \bmod N_{RB}^{interlace})T) \bmod 12$$

wherein $m_{cs}^i$ corresponds to a cyclic shift member of the CSMn on position j in the CSG, $m_{cs}^i$ corresponds to the first cyclic shift member CSMf and i is the position indicated by the second indication, and $N_{RB}^{interlace}$ is a total number of PRB within 1 interlace.

14. A computer readable medium comprising program instructions for causing a user equipment to perform the steps of the generating method according to any of claims 1 to 12.

**Patentansprüche**

1. Verfahren zur Erzeugung eines physischen Uplink-Steuerkanals (Physical Uplink Control Channel, PUCCH) in einem unlizenzierten Spektrum, der von einem Benutzergerät übertragen wird, wobei das Verfahren umfasst:

- Erzeugen eines PUCCH-Formats 1 in einer verschachtelten Struktur durch:

  o Bestimmen einer zyklischen Verschiebungsgruppe (Cyclic Shift Group, CSG), die ein erstes zyklisches Verschiebungselement (First Cyclic Shift Member, CSMf) und eine Vielzahl nachfolgender zyklischer Verschiebungselemente (CSMn) enthält, wobei jedes zyklische Verschiebungselement (CSM) mindestens durch einen Wert und eine Position definiert ist, durch:

    • Konfigurieren des CSMf mit einer ersten Angabe, die sich auf einen CSMf-Wert bezieht, und einer zweiten Angabe, die sich auf eine CSMf-Position bezieht, wobei die erste Angabe entweder eine direkte Angabe des CSMf-Werts aus einem Satz von CSM-Kandidaten oder eine indirekte Angabe durch einen ersten Versatz in Bezug auf einen Referenzwert des CSMf in einem Satz von geordneten CSM-Kandidaten ist;
    • Ableiten der Vielzahl von CSMn basierend auf dem CSMf-Wert und einer relativen Position zwischen dem CSMf und jedem CSMn, um so alle CSM zu definieren, die sich voneinander unterscheiden, wobei die Werte der Vielzahl von nachfolgenden CSMn unter Verwendung einer dritten Funktion abgeleitet werden, die mindestens einen Parameter T enthält, der durch eine dritte Angabe bestimmt wird;

    wobei die Position eine Position des CSMf in der CSG ist;
    o Bestimmen einer ersten Steuersequenz $S_{cs}^i(n)$ in einem orthogonalen Frequenzmultiplex (Orthogonal Frequency Division Multiplexing, OFDM)-Symbol innerhalb der für die Steuersequenz zugewiesenen OFDM-Symbole durch eine erste Basissequenz $S(n)$, ein Bestätigungsinformations (Acknowledgment Information, A/N)-Symbol $b$ und die CSG;

    o Bestimmen einer ersten Referenzsequenz $R_{cs}^i(n)$ in einem OFDM-Symbol innerhalb aller OFDM-Symbole, die der Referenzsequenz zugewiesen sind, durch die erste Basissequenz $S(n)$ und die CSG;

    **dadurch gekennzeichnet, dass** die dritte Funktion durch Folgendes definiert ist:

$$m_{cs}^j = (m_{cs}^i + ((j - i) \bmod N_{RB}^{interlace})T) \bmod 12$$

wobei $m_{cs}^i$ einem zyklischen Verschiebungselement des CSMn an der Position j in der CSG entspricht, $m_{cs}^i$ dem ersten zyklischen Verschiebungselement CSMf entspricht und i die durch die zweite Angabe angegebene Position ist und $N_{RB}^{interlace}$ die Gesamtzahl von PRB innerhalb 1 Verschachtelung ist.

2. Verfahren zur Erzeugung eines PUCCH nach Anspruch 1, wobei das A/N-Symbol ein komplexwertiges Symbol $b$ ist, BPSK für 1-Bit-A/N oder QPSK für 2-Bit-A/N.

3. Verfahren zur Erzeugung eines PUCCH nach Anspruch 2, wobei die erste Steuersequenz durch Folgendes erhalten wird:

$$S_{cs}^i(n) = e^{\frac{j\pi}{6} m_{cs}^i n} \cdot b \cdot S(n)$$

wobei $S(n)$ die erste Basissequenz ist, $m_{cs}^i$ ein zyklisches Verschiebungselement der CSG ist und eine Position, die $m_{cs}^i$ entspricht, eine i-te Position innerhalb der CSG ist und $b$ das A/N-Symbol ist.

4. Verfahren zur Erzeugung eines PUCCH nach Anspruch 3, wobei die erste Referenzsequenz durch Folgendes erhalten wird:

$$R_{cs}^i(n) = e^{\frac{j\pi}{6} m_{cs}^i n} \cdot S(n).$$

5. Verfahren zur Erzeugung eines PUCCH nach einem der Ansprüche 1 bis 4, wobei die CSG eine Planungsanforderungs (Scheduling Request, SR)-Information beinhaltet.

6. Verfahren zur Erzeugung eines PUCCH nach einem der Ansprüche 1 bis 5, das Verfahren umfassend:

   Verteilen der ersten Steuersequenz $S_{cs}^{i,j}(n)$ über die OFDM-Symbole, die der Steuersequenz zugewiesen sind; und

   Verteilen der ersten Referenzsequenz $R_{cs}^{i,j}(n)$ über die OFDM-Symbole, die der Referenzsequenz zugewiesen sind.

7. Verfahren zur Erzeugung eines PUCCH nach Anspruch 6, wobei die Verteilung der Steuersequenz sich durch Folgendes ergibt:

$$S_{cs}^{i,j}(n) = S_{cs}^i(n) \cdot w(j),$$

   wobei $w(j)$ eine erste orthogonale Sequenz ist und für die das erzeugte PUCCH-Format 1 $m$ OFDM-Symbole für die erste Verteilung der Steuersequenz enthält;
   und wobei sich die erste Verteilung der Referenzsequenz durch Folgendes ergibt:

$$R_{cs}^{i,j}(n) = R_{cs}^i(n) \cdot w'(j),$$

   wobei $w'(j)$ die zweite orthogonale Sequenz ist und für die das erzeugte PUCCH-Format 1 $l$ OFDM-Symbole für die erste Verteilung der Referenzsequenz enthält.

8. Verfahren zur Erzeugung eines PUCCH nach Anspruch 7, wobei in dem Fall einer indirekten Angabe der Referenzwert des CSMf entweder vordefiniert oder über eine Funkressourcensteuerung (Radio Resource Control, RRC) konfiguriert oder durch eine erste Funktion abgeleitet wird.

9. Verfahren zur Erzeugung eines PUCCH nach einem der Ansprüche 1 bis 8, wobei ein Standard-CSMf-Wert festgelegt wird, wenn keine erste Angabe vorhanden ist.

10. Verfahren zur Erzeugung eines PUCCH nach einem der Ansprüche 1 bis 9, wobei die zweite Angabe entweder eine direkte Angabe der CSMf-Position in der CSG aus einem Satz von Positionskandidaten oder eine indirekte Angabe durch einen zweiten Versatz in Bezug auf eine Referenzposition des CSMf in einem Satz von geordneten Positionskandidaten ist.

**11.** Verfahren zur Erzeugung eines PUCCH nach Anspruch 10, wobei in dem Fall einer indirekten Angabe die Referenzposition des CSMf entweder vordefiniert oder über eine Funkressourcensteuerung (RRC) konfiguriert oder durch eine zweite Funktion abgeleitet wird.

**12.** Verfahren zur Erzeugung eines PUCCH nach einem der Ansprüche 1 bis 11, wobei eine Standard-CSMf-Position festgelegt wird, wenn keine zweite Angabe vorhanden ist.

**13.** Benutzergerät, das einen physischen Uplink-Steuerkanal (PUCCH) an eine Basisstation in einem drahtlosen Kommunikationssystem in dem unlizenzierten Spektrum überträgt, wobei das Benutzergerät umfasst:

- einen Prozessor, der konfiguriert ist, um ein PUCCH-Format 1 in einer verschachtelten Struktur zu erzeugen durch:

o Bestimmen einer zyklischen Verschiebungsgruppe (CSG), die ein erstes zyklisches Verschiebungselement (CSMf) und eine Vielzahl nachfolgender zyklischer Verschiebungselemente (CSMn) enthält, wobei jedes zyklische Verschiebungselement (CSM) mindestens durch einen Wert und eine Position definiert ist, durch:

• Konfigurieren des CSMf mit einer ersten Angabe, die sich auf einen CSMf-Wert bezieht, und einer zweiten Angabe, die sich auf eine CSMf-Position bezieht, wobei die erste Angabe entweder eine direkte Angabe des CSMf-Werts aus einem Satz von CSM-Kandidaten oder eine indirekte Angabe durch einen ersten Versatz in Bezug auf einen Referenzwert des CSMf in einem Satz von geordneten CSM-Kandidaten ist;
• Ableiten der Vielzahl von CSMn basierend auf dem CSMf-Wert und einer relativen Position zwischen dem CSMf und jedem CSMn, um so alle CSM zu definieren, die sich voneinander unterscheiden, wobei die Werte der Vielzahl von nachfolgenden CSMn unter Verwendung einer dritten Funktion abgeleitet werden, die mindestens einen Parameter T enthält, der durch eine dritte Angabe bestimmt wird;

wobei die Position eine Position des CSMf in der CSG ist;

o Bestimmen einer ersten Steuersequenz $S_{cs}^i(n)$ in einem orthogonalen Frequenzmultiplex (OFDM)-Symbol innerhalb der für die Steuersequenz zugewiesenen OFDM-Symbole durch eine erste Basissequenz $S(n)$, ein Bestätigungsinformations (A/N)-Symbol $b$ und die CSG;

o Bestimmen einer ersten Referenzsequenz $R_{cs}^i(n)$ in einem OFDM-Symbol innerhalb aller OFDM-Symbole, die der Referenzsequenz zugewiesen sind, durch die erste Basissequenz $S(n)$ und die CSG;

**dadurch gekennzeichnet, dass** die dritte Funktion durch Folgendes definiert ist:

$$m_{cs}^j = (m_{cs}^i + ((j-i) \bmod N_{RB}^{interlace})T) \bmod 12$$

wobei $m_{cs}^i$ einem zyklischen Verschiebungselement des CSMn an der Position j in der CSG entspricht, $m_{cs}^i$ dem ersten zyklischen Verschiebungselement CSMf entspricht und i die durch die zweite Angabe angegebene Position ist und $N_{RB}^{interlace}$ die Gesamtzahl von PRB innerhalb 1 Verschachtelung ist.

**14.** Computerlesbares Medium, umfassend Programmanweisungen, um einen Computer zu veranlassen, die Schritte des Erzeugungsverfahrens nach einem der Ansprüche 1 bis 12 durchzuführen.

**Revendications**

**1.** Procédé de génération d'un canal de commande en liaison montante physique, PUCCH, dans un spectre sans licence, qui est transmis par un équipement utilisateur, dans lequel le procédé comprend :

- la génération d'un format 1 PUCCH dans une structure entrelacée par :

o la détermination d'un groupe de décalage cyclique, CSG, contenant un premier élément de décalage cyclique, CSMf, et une pluralité d'éléments de décalage cyclique ultérieurs, CSMn, chaque élément de décalage cyclique, CSM, étant défini au moins par une valeur et une position, par :

▪ la configuration du CSMf avec une première indication liée à une valeur de CSMf et une deuxième indication liée à une position de CSMf, dans lequel la première indication est soit une indication directe de la valeur de CSMf provenant d'un ensemble de candidats CSM, soit une indication indirecte par un premier décalage par rapport à une valeur de référence du CSMf dans un ensemble de candidats CSM ordonnés ;

▪ la déduction de la pluralité de CSMn sur la base de la valeur de CSMf et sur une position relative entre le CSMf et chaque CSMn de façon à définir tous les CSM qui sont mutuellement différents, dans lequel des valeurs de la pluralité de CSMn ultérieurs sont déduites en utilisant une troisième fonction incluant au moins un paramètre T déterminé par une troisième indication ;

dans lequel la position est une position du CSMf dans le CSG ;

o la détermination d'une première séquence de commande $S_{cs}^{i}(n)$ , dans un symbole de multiplexage par répartition orthogonale de la fréquence, OFDM, à l'intérieur de symboles OFDM attribués pour une séquence de contrôle, par une première séquence de base $S(n)$, un symbole b d'informations d'accusé de réception, A/N, et le CSG ;

o la détermination d'une première séquence de référence $R_{cs}^{i}(n)$ , dans un symbole OFDM à l'intérieur de tous les symboles OFDM attribués pour une séquence de référence, par la première séquence de base $S(n)$ et le CSG ;

**caractérisé en ce que** la troisième fonction est définie par :

$$m_{cs}^{j} = (m_{cs}^{i} + ((j - i)\bmod N_{RB}^{interlace})T)\bmod 12$$

dans lequel $m_{cs}^{i}$ correspond à un élément de décalage cyclique du CSMn sur une position j dans le CSG, $m_{cs}^{i}$ correspond au premier élément de décalage cyclique CSMf et i est la position indiquée par la deuxième indication, et $N_{RB}^{interlace}$ est un nombre total de PRB à l'intérieur de 1 entrelacement.

2. Procédé de génération d'un PUCCH selon la revendication 1, dans lequel le symbole A/N est un symbole à valeur complexe b, BPSK pour un A/N de 1 bit ou QPSK pour un A/N de 2 bits.

3. Procédé de génération d'un PUCCH selon la revendication 2, dans lequel la première séquence de commande est obtenue par :

$$S_{cs}^{i}(n) = e^{\frac{j\pi}{6}m_{cs}^{i}n} \cdot b \cdot S(n)$$

dans lequel $S(n)$ est la première séquence de base, $m_{cs}^{i}$ est un élément de décalage cyclique du CSG, et une position correspondant à $m_{cs}^{i}$ est une $i^{\text{ème}}$ position à l'intérieur du CSG, et b est le symbole A/N.

4. Procédé de génération d'un PUCCH selon la revendication 3, dans lequel la première séquence de référence est obtenue par :

$$R^i_{cs}(n) = e^{\frac{j\pi}{6}m^i_{cs}n} \cdot S(n).$$

**5.** Procédé de génération d'un PUCCH selon l'une quelconque des revendications 1 à 4, dans lequel le CSG inclut des informations de demande de planification, SR.

**6.** Procédé de génération d'un PUCCH selon l'une quelconque des revendications 1 à 5, le procédé comprenant :

l'étalement de la première séquence de commande $S^{i,j}_{cs}(n)$ sur les symboles OFDM attribués pour la séquence de commande ; et

l'étalement de la première séquence de référence $R^{i,j}_{cs}(n)$ sur les symboles OFDM attribués pour la séquence de référence.

**7.** Procédé de génération d'un PUCCH selon la revendication 6, dans lequel l'étalement de la séquence de commande est donné par :

$$S^{i,j}_{cs}(n) = S^i_{cs}(n) \cdot w(j),$$

dans lequel *w(j)* est une première séquence orthogonale et pour lequel le format 1 PUCCH généré contient m symboles OFDM pour le premier étalement de la séquence de commande ;
et dans lequel le premier étalement de la séquence de référence est donné par :

$$R^{i,j}_{cs}(n) = R^i_{cs}(n) \cdot w'(j),$$

dans lequel *w'(j)* est la deuxième séquence orthogonale et pour lequel le format 1 PUCCH généré contient *l* symboles OFDM pour le premier étalement de séquences de référence.

**8.** Procédé de génération d'un PUCCH selon la revendication 7, dans lequel, dans le cas d'une indication indirecte, la valeur de référence du CSMf est soit prédéfinie, soit configurée via une commande de ressource radio, RRC, ou déduite par une première fonction.

**9.** Procédé de génération d'un PUCCH selon l'une quelconque des revendications 1 à 8, dans lequel une valeur de CSMf par défaut est définie en l'absence d'une première indication.

**10.** Procédé de génération d'un PUCCH selon l'une quelconque des revendications 1 à 9, dans lequel la deuxième indication est soit une indication directe de la position du CSMf dans le CSG à partir d'un ensemble de candidats de position, soit une indication indirecte par un deuxième décalage par rapport à une position de référence du CSMf dans un ensemble de candidats de position ordonnés.

**11.** Procédé de génération d'un PUCCH selon la revendication 10, dans lequel, dans le cas d'une indication indirecte, la position de référence du CSMf est soit prédéfinie, soit configurée via une commande de ressource radio, RRC, ou déduite par une deuxième fonction.

**12.** Procédé de génération d'un PUCCH selon l'une quelconque des revendications 1 à 11, dans lequel une position de CSMf par défaut est définie en l'absence d'une deuxième indication.

**13.** Équipement utilisateur transmettant un canal de commande en liaison montante physique, PUCCH, à une station de base dans un système de communication sans fil dans un spectre sans licence, dans lequel l'équipement utilisateur comprend :

- un processeur configuré pour générer un format 1 PUCCH dans une structure entrelacée par :

  o la détermination d'un groupe de décalage cyclique, CSG, contenant un premier élément de décalage cyclique, CSMf, et une pluralité d'éléments de décalage cyclique ultérieurs, CSMn, chaque élément de décalage cyclique, CSM, étant défini au moins par une valeur et une position, par :

    ▪ la configuration du CSMf avec une première indication liée à une valeur de CSMf et une deuxième indication liée à une position de CSMf, dans lequel la première indication est soit une indication directe de la valeur de CSMf provenant d'un ensemble de candidats CSM, soit une indication indirecte par un premier décalage par rapport à une valeur de référence du CSMf dans un ensemble de candidats CSM ordonnés ;
    ▪ la déduction de la pluralité de CSMn sur la base de la valeur de CSMf et sur une position relative entre le CSMf et chaque CSMn de façon à définir tous les CSM qui sont mutuellement différents, dans lequel des valeurs de la pluralité de CSMn ultérieurs sont déduites en utilisant une troisième fonction incluant au moins un paramètre T déterminé par une troisième indication ;

  dans lequel la position est une position du CSMf dans le CSG ;

  o la détermination d'une première séquence de commande $S_{cs}^{i}(n)$ , dans un symbole de multiplexage par répartition orthogonale de la fréquence, OFDM, à l'intérieur de symboles OFDM attribués pour une séquence de contrôle, par une première séquence de base S(n), un symbole b d'informations d'accusé de réception, A/N, et le CSG ;

  o la détermination d'une première séquence de référence $R_{cs}^{i}(n)$ , dans un symbole OFDM à l'intérieur de tous les symboles OFDM attribués pour une séquence de référence, par la première séquence de base $S(n)$ et le CSG ;

  **caractérisé en ce que** la troisième fonction est définie par :

  $$m_{cs}^{j} = (m_{cs}^{i} + ((j - i) \bmod N_{RB}^{interlace})T) \bmod 12$$

  dans lequel $m_{cs}^{i}$ correspond à un élément de décalage cyclique du CSMn sur une position j dans le CSG, $m_{cs}^{i}$ correspond au premier élément de décalage cyclique CSMf et i est la position indiquée par la deuxième indication, et $N_{RB}^{\overline{interlace}}$ est un nombre total de PRB à l'intérieur de 1 entrelacement.

14. Support lisible par ordinateur comprenant des instructions de programme permettant d'amener un équipement utilisateur à mettre en œuvre les étapes du procédé de génération selon l'une quelconque des revendications 1 à 12.

Figure 1

Figure 2

| 0 | 1 | 2 | 3 | 4 | 5 | 6 | 7 | 8 | 9 | position i |
|---|---|---|---|---|---|---|---|---|---|---|
| $m_{cs}^0$ | $m_{cs}^1$ | $m_{cs}^2$ | $m_{cs}^3$ | $m_{cs}^4$ | $m_{cs}^5$ | $m_{cs}^6$ | $m_{cs}^7$ | $m_{cs}^8$ | $m_{cs}^9$ | CSM of ith position |

Figure 3

| 0 | 1 | 2 | 3 | 4 | 5 | 6 | 7 | 8 | 9 | position i |
|---|---|---|---|---|---|---|---|---|---|---|
| $m_{cs}^0{=}0$ | $m_{cs}^1{=}1$ | $m_{cs}^2{=}2$ | $m_{cs}^3{=}3$ | $m_{cs}^4{=}4$ | $m_{cs}^5{=}5$ | $m_{cs}^6{=}6$ | $m_{cs}^7{=}7$ | $m_{cs}^8{=}8$ | $m_{cs}^9{=}9$ | CSM of ith position |

Figure 4

| 0 | 1 | 2 | 3 | 4 | 5 | 6 | 7 | 8 | 9 | position i |
|---|---|---|---|---|---|---|---|---|---|---|
| $m_{cs}^0{=}5$ | $m_{cs}^1{=}6$ | $m_{cs}^2{=}7$ | $m_{cs}^3{=}8$ | $m_{cs}^4{=}9$ | $m_{cs}^5{=}0$ | $m_{cs}^6{=}1$ | $m_{cs}^7{=}2$ | $m_{cs}^8{=}3$ | $m_{cs}^9{=}4$ | CSM of ith position |

Figure 5

| 0 | 1 | 2 | 3 | 4 | 5 | 6 | 7 | 8 | 9 | position i |
|---|---|---|---|---|---|---|---|---|---|---|
| $m_{cs}^0{=}7$ | $m_{cs}^1{=}8$ | $m_{cs}^2{=}9$ | $m_{cs}^3{=}10$ | $m_{cs}^4{=}11$ | $m_{cs}^5{=}2$ | $m_{cs}^6{=}3$ | $m_{cs}^7{=}4$ | $m_{cs}^8{=}5$ | $m_{cs}^9{=}6$ | CSM of ith position |

Figure 6

| positive SR | | | | | negative SR | | | | | position i |
|---|---|---|---|---|---|---|---|---|---|---|
| 0 | 1 | 2 | 3 | 4 | 5 | 6 | 7 | 8 | 9 | |
| $m_{cs}^0$=7 | $m_{cs}^1$=8 | $m_{cs}^2$=9 | $m_{cs}^3$=10 | $m_{cs}^4$=11 | $m_{cs}^5$=2 | $m_{cs}^6$=3 | $m_{cs}^7$=4 | $m_{cs}^8$=5 | $m_{cs}^9$=6 | CSM of ith position |

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QUALCOMM INCORPORATED.** UL signals and channels for NRU. *R1-1909244*
- **ZTE et al.** Considerations on UL reference signals and channels design for NR-U. *R1-1903872*
- **PANASONIC.** UL signals and channels for NR-U. *R1-1908424*